(19) Europäisches Patentamt
European Patent Office
Office européen des brevets

(11) EP 1 669 387 B1

(12) EUROPEAN PATENT SPECIFICATION

(45) Date of publication and mention of the grant of the patent:
**16.12.2009 Bulletin 2009/51**

(21) Application number: **04788332.7**

(22) Date of filing: **29.09.2004**

(51) Int Cl.:
***C08G 63/60** (2006.01)* ***C08L 63/00** (2006.01)*
***C08K 3/00** (2006.01)*

(86) International application number:
**PCT/JP2004/014266**

(87) International publication number:
**WO 2005/033177 (14.04.2005 Gazette 2005/15)**

# (54) LIQUID-CRYSTAL POLYESTER RESIN

FLÜSSIGKRISTALLINES POLYESTERHARZ

RESINE DE POLYESTER CRISTAL LIQUIDE

(84) Designated Contracting States:
**AT BE BG CH CY CZ DE DK EE ES FI FR GB GR HU IE IT LI LU MC NL PL PT RO SE SI SK TR**

(30) Priority: **02.10.2003 JP 2003344384**

(43) Date of publication of application:
**14.06.2006 Bulletin 2006/24**

(73) Proprietor: **Ueno Fine Chemicals Industry, Ltd.**
**Chuo-ku, Osaka-shi**
**Osaka-fu (JP)**

(72) Inventors:
- **UENO, Ryuzo**
**Nishinomiya-shi, Hyogo 6620038 (JP)**
- **KITAYAMA, Masaya**
**Takarazuka-shi, Hyogo 6650881 (JP)**
- **KATO, Hiroyuki**
**Kawanishi-shi, Hyogo 6660114 (JP)**
- **TERADA, Hiroaki**
**Ikeda-shi, Osaka 5630032 (JP)**
- **ASAHARA, Motoki**
**Sanda-shi, Hyogo 6691532 (JP)**

(74) Representative: **Albrecht, Thomas et al**
**Kraus & Weisert**
**Patent- und Rechtsanwälte**
**Thomas-Wimmer-Ring 15**
**80539 München (DE)**

(56) References cited:
**EP-A- 0 337 729** **EP-A- 1 116 739**
**JP-A- 6 329 775** **JP-A- 7 207 011**
**US-A- 4 522 974** **US-A- 5 179 192**

EP 1 669 387 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a wholly aromatic liquid-crystalline polyester resin. More particularly, the present invention relates to a wholly aromatic liquid-crystalline polyester resin which exhibits good molding processability at low temperatures and excellent mechanical properties.

Background art

Thermotropic liquid-crystalline polyester resin (which is called as liquid-crystalline polyester resin or LCP hereinafter) has good properties including heat resistance, mechanical properties such as rigidity, chemical resistance and dimensional accuracy and is used not only for molded articles but also for a variety of products such as fibers and films. Particularly, personal computers and mobile phones employ highly integrated devices and the art wishes to use downsized, thinner and smaller parts for them. In the information and telecommunication fields, very thin parts, as thin as 0.5 mm or less of the thickness, are sometimes required. Based on the excellent molding properties of the LCPs including good flowability and less flash development compared to the other thermoplastic resins, consumption of the LCPs has been increasing.

While the liquid-crystalline polyester resin exhibits high heat resistance, the LCP has extremely higher molding temperatures compared to other engineering plastics such as polyethyleneterephthalate, polybutyleneterephthalate and polycarbonate. Accordingly, in some applications, LCP may not be suitable because of its high molding temperatures.

The art desires the liquid-crystalline polyester resins which show the good molding processability at low temperatures with retaining the good mechanical properties, chemical resistance and dimensional accuracy of wholly aromatic liquid-crystalline polyester resins. As an example of liquid-crystalline polyester resins which exhibit good molding processability at low temperatures, Patent literature 1 discloses a resin of which melting point determined by differential scanning calorimetry is 270-280°C.

Patent literature 1: Japanese Patent Application Laid Open No. Sho. 55-144024

Disclosure of the Invention

Problems to be Solved by the Invention

An object of the present invention is to provide a wholly aromatic liquid-crystalline polyester resin which exhibits good molding processability at low temperatures and excellent mechanical properties.

Means for Solving the Problems

The present invention provides a liquid-crystalline polyester resin, essentially consisting of the repeating units represented by formulae [I]-[IV]:

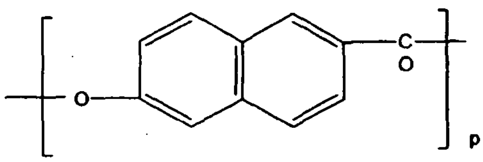

[I]

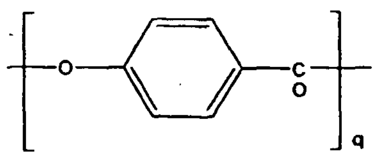

[II]

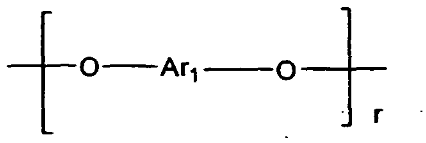

[ III ]

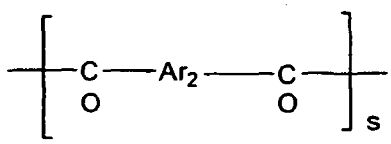

[ IV ]

wherein $Ar_1$ and $Ar_2$ independently represent one or more bivalent aromatic group;
p, q, r and s represent relative molar proportions (mol %) of the repeating units based on the total repeating units represented by formulae [I]-[IV] in the liquid-crystalline polyester resin and satisfy the following formulae:

$$0.4 \leqq p/q \leqq 2.0,$$

$$2 \leqq r \leqq 15,$$

$$2 \leqq s \leqq 15,$$

and

$$p+q+r+s = 100,$$

provided that the liquid-crystalline polyester resin has a melting point of 190-250°C determined by differential scanning calorimetry.

In the specification and claims, the term "liquid-crystalline polyester resin" refers to a polyester resin which exhibits anisotropic melt phase and is called as thermotropic liquid-crystalline polyester resin by those skilled in the art.

The anisotropic melt phase can be confirmed by means of conventional polarized light system using orthogonal light polarizer. In more detail, the sample on the hot stage under nitrogen atmosphere may be observed.

In the specification and claims, p+q+r+s equals to 100 (mol %).

In the specification and claims, the term "essentially consisting of the repeating units represented by formulae [I]-[IV]" represents that the liquid-crystalline polyester resin of the present invention may comprise one or more additional resin component other than repeating units represented by formulae [I]-[IV] unless the additional resin component does not impair the object of the present invention.

In other words, the liquid-crystalline polyester resin of the present invention may be prepared by copolymerizing the additional monomers with major monomers which provide the repeating units represented by formulae [I]-[IV].

Examples of such additional monomers include aromatic hydroxycarboxylic acid, aromatic diol, aromatic dicarboxylic acid, aromatic hydroxydicarboxylic acid, aromatic hydroxyamine, aromatic diamine, aromatic aminocarboxylic acid, alicyclic dicarboxylic acid, aliphatic diol, alicyclic diol, aromatic mercaptocarboxylic acid, aromatic dithiol, aromatic mercaptophenol and the like.

The proportion of these additional monomers to the total amount of monomers providing repeating units represented by formulae [I]-[IV] is preferably no more than 10 mol %.

The liquid-crystalline polyester resin of the present invention essentially comprises aromatic oxycarbonyl repeating units represented by formula [I] and formula [II] as repeating units:

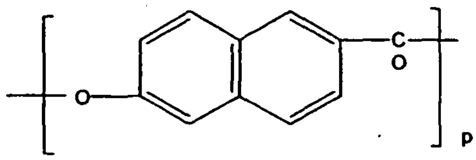

[I]

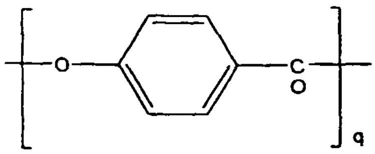

[II]

wherein p and q represent molar proportions (mol %) of repeating units of formula [I] and formula [II] based on the total amount of repeating units of formulae [I]-[IV] in the liquid-crystalline polyester resin of the present invention.

According to the invention, the molar proportion between the repeating units of formula [I] and those of formula [II], i.e., p/q, is 0.4-2.0, preferably 0.6-1.8, and more preferably 0.8-1.6.

According to the invention, the molar proportions of each repeating units of formula [I] and formula [II] based on the total amount of repeating units of formulae [I]-[IV], i.e., p and q, are 35-48, and preferably 38-43.

Examples of monomers which provide the repeating unit of formula [I] are 6-hydroxy-2-naphthoic acid and ester forming derivatives such as acyl derivative, ester derivatives and acyl halide thereof.

Examples of monomers which provide the repeating unit of formula [II] are p-hydroxybenzoic acid and ester forming derivatives such as acyl derivative, ester derivatives and acyl halide thereof.

The liquid-crystalline polyester resin of the present invention essentially comprises an aromatic dioxy repeating unit represented by formula [III] as a repeating unit:

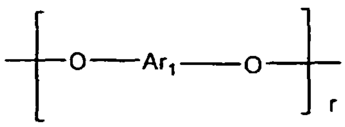

[III]

wherein $Ar_1$ represents divalent aromatic group; r represents molar proportion (mol %) of the repeating unit of formula [III] based on the total amount of repeating units of formulae [I]-[IV] in the liquid-crystalline polyester resin of the present invention.

Preferably, the aromatic dioxy repeating unit represented by formula [III] is one or more moiety wherein $Ar_1$ is selected from the group consisting of:

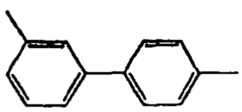
,
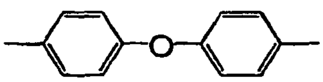
,
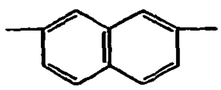
,
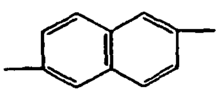
,
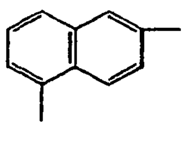
and
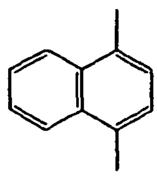
.

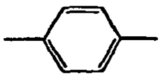, 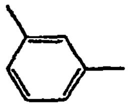, 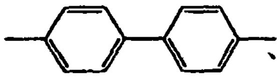, 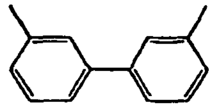,

Among the above, those wherein $Ar_1$ is:

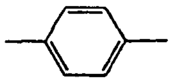 and/or 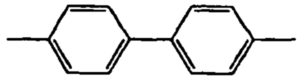

are more preferable and that of which $Ar_1$ is:

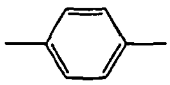

is the most preferable.

Examples of monomers which provide the repeating unit of formula [III] are aromatic diols such as hydroquinone, resorcin, 4,4'-dihydroxybiphenyl, 3,3'-dihydroxybiphenyl, 3,4'-dihydroxybiphenyl, 4,4'-dihydroxybiphenylether, 2,6-dihydroxynaphthalene, 2,7-dihydroxynaphthalene, 1,6-dihydroxynaphthalene, 1,4-dihydroxynaphthalene and alkyl-, alkoxy- or halogen-substituted derivatives thereof as well as ester forming derivatives such as acyl derivative thereof.

The liquid-crystalline polyester resin of the present invention essentially comprises an aromatic dicarbonyl repeating unit represented by formula [IV] as a repeating unit:

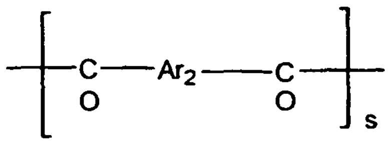 [IV]

wherein $Ar_2$ represents divalent aromatic group; s represents molar proportion (mol %) of the repeating unit of formula [IV] based on the total amount of repeating units of formulae [I]-[IV] in the liquid-crystalline polyester resin of the present invention.

Preferably, the aromatic dicarbonyl repeating unit represented by formula [IV] is one or more of moiety of which $Ar_2$ is selected from the group consisting of:

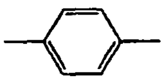, 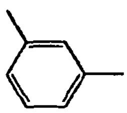, 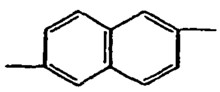, 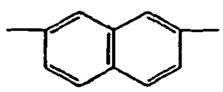,

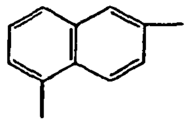 , 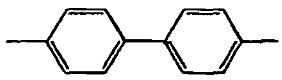 , 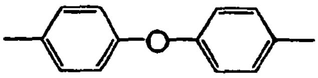 and

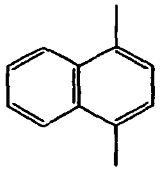 .

Among the above, those wherein $Ar_2$ is:

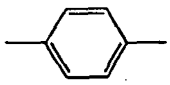 and/or 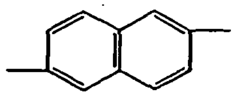

are more preferable and that wherein $Ar_2$ is:

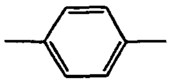

is the most preferable.

Examples of monomers which provide the repeating unit of formula [IV] are aromatic dicarboxylic acids such as terephthalic acid, isophthalic acid, 2,6-naphthalenedicarboxylic acid, 1,6-naphthalenedicarboxylic acid, 2,7-naphthalenedicarboxylic acid, 1,4-naphthalenedicarboxylic acid, 4,4'-dicarboxybiphenyl, bis(4-carboxyphenyl)ether and alkyl-, alkoxy- or halogen-substituted derivatives thereof as well as ester forming derivatives such as ester derivatives and acyl halide thereof.

According to the present invention, the molar proportions of each repeating units of formula [III] and formula [IV] based on the total amount of the repeating units of formulae [I]-[IV], i.e., r and s, are 2-15, and preferably 5-13. In addition, in the liquid-crystalline polyester resin of the present invention, it is preferable that the molar amounts of the repeating units of formula [III] and those of the repeating units of formula [IV] are substantially equal, i.e., r=s.

The method for preparing the liquid-crystalline polyester resin of the present invention is not limited and any known method can be employed. For example, conventional polymerization methods such as molten acidolysis method and slurry polymerization method for preparing polyester to give ester bondings among the above described monomer components may be employed.

The molten acidolysis method is preferably used for the present invention. In this method, the polymerizing monomers are heated to give a molten solution of the reactants and then the solution is reacted to give the molten polymer. The final step of this method may be carried out under vacuum to facilitate the removal of the volatile by-products such as acetic acid or water.

The slurry polymerization method is **characterized in that** monomers are reacted in a heat exchange fluid to give the solid state polymer in the form of suspension in the heat exchange liquid medium.

In either of the molten acidolysis method or the slurry polymerization method, the polymerizing monomer components used for the preparation of the liquid-crystalline polyester resin may be in the denatured form, i.e. in the form of $C_{2-5}$ acyl esters, which are obtained by esterifying the hydroxyl groups. Among the $C_{2-5}$ acyl groups, $C_{2-3}$ acyl groups are preferable. Acetic esters are most preferably used for the reaction.

The $C_{2-5}$ acyl esters of the monomers may be those prepared beforehand by acylating the monomers independently or may be those produced in the reaction system by adding an acylating agent such as acetic anhydride to the monomers upon preparing the liquid-crystalline polyester.

In either of the molten acidolysis method or the slurry polymerization method, a catalyst may be used in the reaction, if desired.

Examples of the catalysts include organic tin compounds such as dialkyl tin oxide (ex. dibutyl tin oxide) and diaryl tin oxide; organic titanium compounds such as titanium dioxide, antimony trioxide, alkoxy titanium silicate and

titanium alkoxide; alkaline or alkaline earth metal salt of carboxylic acid such as potassium acetate; alkaline or alkaline earth metal salt of inorganic acid such as potassium sulfate and gaseous acid catalysts such as Lewis acid (ex. $BF_3$) and halogenated hydrogen (ex. HCl).

When a catalyst is used, the amount of the catalyst added to the reaction based on the total monomers may preferably be 10-1000 ppm, and more preferably 20-200 ppm.

The melting point of the liquid-crystalline polyester resin of the present invention determined using differential scanning calorimeter (DSC) according to the method described below is 190-250°C, preferably 200-240°C, and more preferably 210-230°C. The liquid-crystalline polyester resin of the present invention with such a low melting point exhibits a good molding processability at low temperatures.

<Method for determining the melting point with DSC>

The differential scanning calorimeter Exstar 6000 (Seiko Instruments Inc., Chiba, Japan) or the same type of DSC device is used. The LCP sample to be examined is heated from room temperature at a rate of 20°C/minute and endothermic peak (Tm1) is recorded. Thereafter, LCP sample is kept at a temperature 20-50°C higher than Tm1 for 10 minutes. Then the sample is cooled to room temperature at the rate of 20°C/minute. Then, LCP sample is heated again at the rate of 20°C/minute and exothermic peak is recorded. Endothermic peak found in the final step is recorded as melting point.

Preferably, the liquid-crystalline polyester resin of the present invention is that log viscosity of the same can be measured in pentafluorophenol. The log viscosity of the polymer measured at a concentration of 0.1 g/dl in pentafluorophenol at 60°C may preferably be 0.3 dl/g or above, more preferably 0.5-10 dl/g, and most preferably 1-8 dl/g.

The melting viscosity of the liquid-crystalline polyester resin of the present invention measured with capillary rheometer may preferably be 1-1000 Pa.s, more preferably 5-300 Pa.s.

The present invention further provides a liquid-crystalline polyester resin composition comprising the above-described liquid-crystalline polyester resin. The liquid-crystalline polyester resin composition may be those obtained by admixing one or more fibrous, plate or particulate filler and/or reinforcement to the liquid-crystalline polyester resin.

The filler and/or reinforcement may be selected from any of conventional reinforcements and/or fillers for resin compositions depending on the intended use and application of the liquid-crystalline polyester resin composition.

Examples of fibrous fillers and/or reinforcements may include glass fiber, silica-alumina fiber, alumina fiber, carbon fiber and aramid fiber. Among them, glass fiber is preferably used.

Examples of plate or particulate fillers and/or reinforcements may include talc, mica, graphite, wollastonite, calcium carbonate, dolomite, clay, glass flake, glass beads, barium sulfate and titanium oxide.

The fillers and/or reinforcements may be added to the liquid-crystalline polyester resin composition in an amount of 0.1-200 parts by weight, especially 10-100 parts by weight to 100 parts by weight of the liquid-crystalline polyester resin.

The liquid-crystalline polyester resin of the present invention which does not contain any additional component other than the liquid-crystalline polyester resin, such as the LCP including no filler and/or reinforcement and the like may be suitably used.

If the amount of fillers and/or reinforcements is more than 200 parts by weight, the moldability of the resulting liquid-crystalline polyester resin composition tends to be decreased or the exhausting of the cylinder or die of the molding device tends to be increased.

The liquid-crystalline polyester resin composition according to the present invention may further be admixed with one or more additives conventionally used for resin compositions, if desired, for example molding lubricant such as higher aliphatic acid, higher aliphatic ester, higher aliphatic amide, higher aliphatic acid metal salt, polysiloxane and fluorocarbon resin; colorant such as dyes and pigments; antioxidant; thermal stabilizer; UV absorbent; antistatic agent and surface active agent.

The amount of additives admixed is not limited and may be selected depending on the intended use or purpose of the liquid-crystalline polyester resin composition. Typically, additives may be added to the liquid-crystalline polyester resin composition of the present invention in an amount of 0.005-1.0 parts by weight, preferably 0.01-0.5 parts by weight per 100 parts by weight of the liquid-crystalline polyester resin. The term "higher" group herein used refers to the group of 10-25 carbon atoms.

Molding lubricants such as higher aliphatic acid, higher aliphatic ester, higher aliphatic acid metal salt or fluorocarbon-type surfactant may be added to the pellets of the liquid-crystalline polyester resin or the liquid-crystalline polyester resin composition before subjecting the pellets to the molding process, so that the agent adhere to the outer surface of the pellets.

The liquid-crystalline polyester resin composition of the present invention may comprise one or more additional resin component unless the additional resin component does not impair the object of the present invention. Examples of the additional resin components include thermoplastic resins such as polyamide, polyester, polyphenylene sulfide, polyether ketone, polycarbonate, polyphenylene ether and denatured derivatives thereof, polysulfone, polyethersulfone

and polyether imide and thermosetting resins such as phenol resin, epoxy resin and polyimide resin. The amount of the additional resin component is not limited, and may be determined dependent on the intended use and application. Typically, such additional resins may be added to the liquid-crystalline polyester resin composition in an amount of 0.1-200 parts by weight, preferably 10-100 parts by weight per 100 parts by weight of the liquid-crystalline polyester resin.

The liquid-crystalline polyester resin composition of the present invention may be obtained by adding fillers, reinforcements and other resin components to the polyester resin and melt kneading the mixture at a temperature from near the melting point of the polymer to the melting point plus 100°C using a kneading machine such as Banbury mixer, kneader, single screw extruder, twin screw extruder or the like.

The liquid-crystalline polyester resin and the liquid-crystalline polyester resin composition according to the present invention may be molded into a molded article with a desired shape by using a conventional melt molding process, preferably injection molding, compression molding, extrusion molding and blow molding.

Brief Description of Drawing

Figure 1 shows the relationship of molar ratios of BON6/POB and melting points of the liquid-crystalline polyester resins obtained by Examples 4-6 and Comparative examples 1-2.

**Examples**

The present invention is further described in reference to the following examples.
In the examples and the drawing, following abbreviations are used.

BON6: 6-hydroxy-2-naphthoic acid
POB: p-hydroxybenzoic acid
HQ: hydroquinone
BP: 4,4'-dihydroxybiphenyl
TPA: terephthalic acid
NDA: 2,6-naphthalenedicarboxylic acid

**(Example 1)**

BON6, POB, HQ and TPA of which the proportions are shown in Table 1 below were fed in a reaction container equipped with an agitating device with torque-meter and a condenser so that the total monomer amount was 5 moles. Then 0.05 g of potassium acetate and acetic anhydride of 1.025 fold moles to the total amount of hydroxyl groups of the monomers were added to the container. The polymerizing reaction was conducted according to the procedure described below.

Table 1

| Example 1: monomer proportions | | | | |
|---|---|---|---|---|
| | BON6 | POB | HQ | TPA |
| g | 386 | 297 | 44 | 67 |
| (mol %) | 41 | 43 | 8 | 8 |

Under the nitrogen atmosphere, the mixture was heated from room temperature to 150°C over one hour and kept at the temperature for 30 minutes, then rapidly heated to 210°C with distilling out the by-product acetic acid and kept at the temperature for 30 minutes. Then the mixture was heated to 335°C over 3 hours and the pressure was reduced to 20 mmHg over 30 minutes. When the torque became the predetermined level, the polymerizing reaction was terminated. The resulting resin was removed from the container and crushed with crusher to give pellets of the liquid-crystalline polyester resin. As a result, the approximately theoretical amount of acetic acid was distilled out. The melting point of the resulting liquid-crystalline polyester resin determined by DSC was 221°C.

**(Example 2)**

Pellets of the liquid-crystalline polyester resin were obtained according to the same manner as described in

Example 1 with the exception that the monomer proportions were changed to those shown in Table 2 below. As a result, the approximately theoretical amount of acetic acid was distilled out. The melting point of the resulting liquid-crystalline polyester resin determined by DSC was 210°C.

Table 2

| Example 2: monomer proportions | | | | |
|---|---|---|---|---|
| | BON6 | POB | BP | NDA |
| g | 377 | 277 | 93 | 108 |
| (mol %) | 40 | 40 | 10 | 10 |

**(Example 3)**

Pellets of the liquid-crystalline polyester resin were obtained according to the same manner as described in Example 1 with the exception that the monomer proportions were changed to those shown in Table 3 below. As a result, the approximately theoretical amount of acetic acid was distilled out. The melting point of the resulting liquid-crystalline polyester resin determined by DSC was 218°C.

Table 3

| Example 3: monomer proportions | | | | | |
|---|---|---|---|---|---|
| | BON6 | POB | HQ | BP | NDA |
| g | 377 | 318 | 22 | 28 | 76 |
| (mol %) | 40 | 46 | 4 | 3 | 7 |

**(Example 4)**

Pellets of the liquid-crystalline polyester resin were obtained according to the same manner as described in Example 1 with the exception that the monomer proportions were changed to those shown in Table 4 below. As a result, the approximately theoretical amount of acetic acid was distilled out. The melting point of the resulting liquid-crystalline polyester resin determined by DSC was 218°C.

Table 4

| Example 4: monomer proportions | | | | |
|---|---|---|---|---|
| | BON6 | POB | HQ | TPA |
| g | 377 | 277 | 55 | 83 |
| (mol %) | 40 | 40 | 10 | 10 |

**(Example 5)**

Pellets of the liquid-crystalline polyester resin were obtained according to the same manner as described in Example 1 with the exception that the monomer proportions were changed to those shown in Table 5 below. As a result, the approximately theoretical amount of acetic acid was distilled out. The melting point of the resulting liquid-crystalline polyester resin determined by DSC was 228°C.

Table 5

| Example 5: monomer proportions | | | | |
|---|---|---|---|---|
| | BON6 | POB | HQ | TPA |
| g | 480 | 200 | 55 | 83 |
| (mol %) | 51 | 29 | 10 | 10 |

**(Example 6)**

Pellets of the liquid-crystalline polyester resin were obtained according to the same manner as described in Example 1 with the exception that the monomer proportions were changed to those shown in Table 6 below. As a result, the approximately theoretical amount of acetic acid was distilled out. The melting point of the resulting liquid-crystalline polyester resin determined by DSC was 230°C.

Table 6

| Example 6: monomer proportions | | | | |
|---|---|---|---|---|
| | BON6 | POB | HQ | TPA |
| g | 273 | 352 | 55 | 83 |
| (mol %) | 29 | 51 | 10 | 10 |

**(Comparative example 1)**

Pellets of the liquid-crystalline polyester resin were obtained according to the same manner as described in Example 1 with the exception that the monomer proportions were changed to those shown in Table 7 below. As a result, the approximately theoretical amount of acetic acid was distilled out. The melting point of the resulting liquid-crystalline polyester resin determined by DSC was 255°C.

Table 7

| Comparative example 1: monomer proportions | | | | |
|---|---|---|---|---|
| | BON6 | POB | HQ | TPA |
| g | 188 | 415 | 55 | 83 |
| (mol %) | 20 | 60 | 10 | 10 |

**(Comparative example 2)**

Pellets of the liquid-crystalline polyester resin were obtained according to the same manner as described in Example 1 with the exception that the monomer proportions were changed to those shown in Table 8 below. As a result, the approximately theoretical amount of acetic acid was distilled out. The melting point of the resulting liquid-crystalline polyester resin determined by DSC was 253°C.

Table 8

| Comparative example 2: monomer proportions | | | | |
|---|---|---|---|---|
| | BON6 | POB | HQ | TPA |
| g | 518 | 173 | 55 | 83 |
| (mol %) | 55 | 25 | 10 | 10 |

In Examples 4-6 and Comparative examples 1-2, proportions of HQ and TPA, which provide repeating units

of formulae [III] and [IV] respectively, were kept constant at 10 mol % and those of BON6 and POB, which provide repeating units of formulae [I] and [II], were changed. Figure 1 shows the relationship of the molar ratios of BON6/POB, i.e., p/q, and the melting points of the resulting liquid-crystalline polyester resins.

Industrial Applicability

The liquid-crystalline polyester resin and the liquid-crystalline polyester resin composition of the present invention are useful for parts of electric and electronic devices, machines and automobiles. In particular, the liquid-crystalline polyester resin of the present invention is suitably used for the applications which require good processability at low temperatures.

## Claims

1. A liquid-crystalline polyester resin, essentially consisting of the repeating units represented by formulae [I]-[IV]:

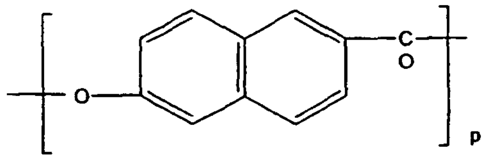

[I]

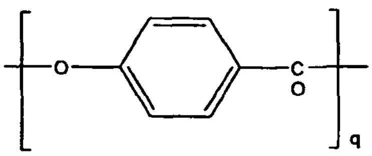

[II]

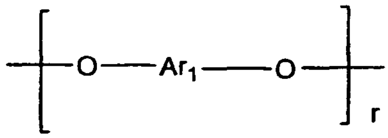

[III]

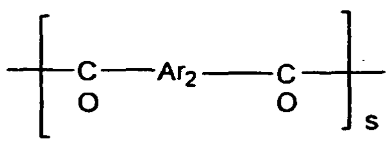

[IV]

wherein $Ar_1$ and $Ar_2$ independently represent one or more bivalent aromatic group;
p, q, r and s represent relative molar proportions (mol %) of the repeating units based on the total repeating units represented by formulae [I]-[IV] in the liquid-crystalline polyester resin and satisfy the following formulae:

$$0.4 \leqq p/q \leqq 2.0,$$

$$2 \leqq r \leqq 15,$$

$$2 \leqq s \leqq 15,$$

and

$$p+q+r+s = 100,$$

provided that the liquid-crystalline polyester resin has a melting point of 190-250°C determined by differential scanning calorimetry.

**2.** The liquid-crystalline polyester resin according to claim 1, wherein p, q, r and s satisfy the following formulae:

$$35 \leqq p \leqq 48,$$

$$35 \leqq q \leqq 48,$$

$$2 \leqq r \leqq 15,$$

$$2 \leqq s \leqq 15,$$

and

$$p+q+r+s = 100.$$

**3.** The liquid-crystalline polyester resin according to claim 1 or claim 2, wherein:

$Ar_1$ represents:

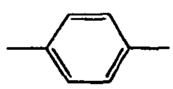 and/or 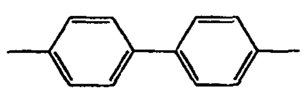 ,

and
$Ar_2$ represents:

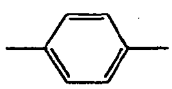 and/or 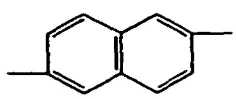 .

**4.** The liquid-crystalline polyester resin according to claim 1 or claim 2, wherein both $Ar_1$ and $Ar_2$ represent:

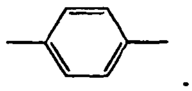

5. A liquid-crystalline polyester resin composition comprising 100 parts by weight of the liquid-crystalline polyester resin according to any one of claims 1-4 and 0.1-200 parts by weight of one or more of fibrous, plate or particulate filler and/or reinforcement.

6. A molded article obtained by molding the liquid-crystalline polyester resin or the liquid-crystalline polyester resin composition according to any one of claims 1-5.

## Patentansprüche

1. Flüssigkristallines Polyesterharz, das im Wesentlichen aus den Repetiereinheiten besteht, die durch die Formeln [I] - [IV] dargestellt werden:

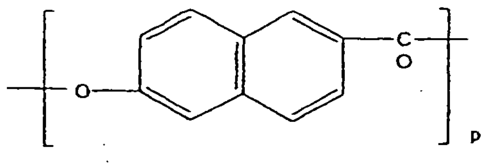

[I]

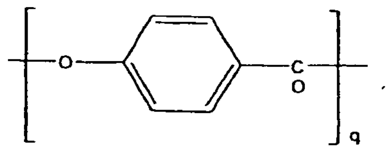

[II]

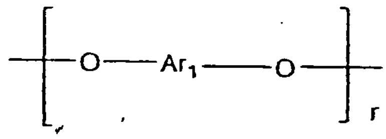

[III]

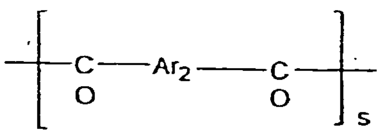

[IV]

worin $Ar_1$ und $Ar_2$ unabhängig eine bivalente aromatische Gruppe oder mehrere bivalente aromatische Gruppen darstellen;
p, q, r und s die relativen molaren Verhältnismengen (Mol-%) der Repetiereinheiten, bezogen auf die gesamten Repetiereinheiten, die durch die Formeln [I] - [IV] dargestellt werden, in dem flüssigkristallinen Polyesterharz darstellen und den folgenden Formeln genügen:

$$0{,}4 \leq p/q \leq 2{,}0,$$

$$2 \leq r \leq 15,$$

$$2 \leq s \leq 15$$

und

$$p + q + r + s = 100,$$

mit der Maßgabe, dass das flüssigkristalline Polyesterharz einen Schmelzpunkt von 190 - 250°C, bestimmt durch Differentialscanningkalorimetrie, hat.

2. Flüssigkristallines Polyesterharz gemäß Anspruch 1, wobei p, q, r und s den folgenden Formeln genügen:

$$35 \leq p \leq 48,$$

$$35 \leq q \leq 48,$$

$$2 \leq r \leq 15,$$

$$2 \leq s \leq 15$$

und

$$p + q + r + s = 100.$$

3. Flüssigkristallines Polyesterharz gemäß Anspruch 1 oder Anspruch 2, wobei:

$Ar_1$

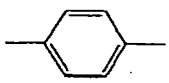

und/oder

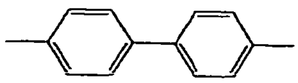

darstellt und

$Ar_2$

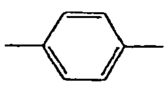

und/oder

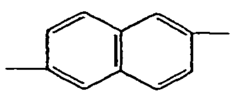

darstellt.

4. Flüssigkristallines Polyesterharz gemäß Anspruch 1 oder Anspruch 2, wobei beide, $Ar_1$ und $Ar_2$,

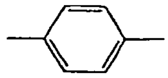

darstellen.

5. Flüssigkristalline Polyesterharzzusammensetzung, die 100 Gewichtsteile des flüssigkristallinen Polyesterharzes gemäß einem der Ansprüche 1 - 4 und 0,1 - 200 Gewichtsteile eines oder mehrerer von faserförmigem, plattenförmigem oder partikulärem Füllstoff und/oder Verstärkungsmittel umfasst. 6. Geformter Gegenstand, erhalten durch Formen des flüssigkristallinen Polyesterharzes oder der flüssigkristallinen Polyesterharzzusammensetzung gemäß einem der Ansprüche 1 bis 5.

## Revendications

1. Résine de polyester liquide cristallin constituée essentiellement par les motifs répétés représentés par les formules [I]-[IV] :

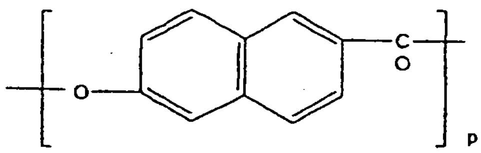

[I]

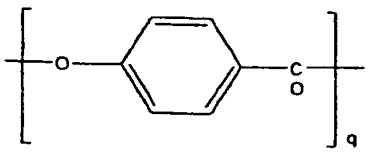

[II]

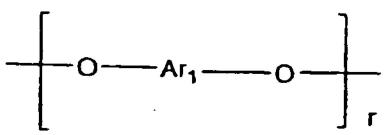

[III]

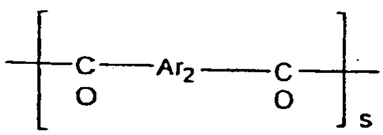

[IV]

dans lesquelles $Ar_1$ et $Ar_2$ représentent indépendamment un ou plusieurs groupes aromatiques bivalents;
p, q, r et s représentent des proportions molaires relatives (% en mole) des motifs répétés par rapport à tous les motifs répétés représentés par les formules [I]-[IV] dans la résine de polyester liquide cristallin et satisfont les formules suivantes:

$$0.4 \leqq p/q \leqq 2.0,$$

$$2 \leqq r \leqq 15,$$

$$2 \leqq s \leqq 15$$

et

$$p+q+r+s = 100,$$

à condition que la résine de polyester liquide cristallin ait un point de fusion cristallin déterminé par calorimétrie différentielle à balayage de 190-250°C.

**2.** Résine de polyester liquide cristallin selon la revendication 1, dans laquelle p, q, r et s satisfont les formules suivantes:

$$35 \leqq p \leqq 48,$$

$$35 \leqq q \leqq 48,$$

$$2 \leqq r \leqq 15,$$

$$2 \leqq s \leqq 15$$

et

$$p+q+r+s = 100.$$

**3.** Résine de polyester liquide cristallin selon la revendication 1 ou la revendication 2, dans laquelle:

$Ar_1$ représente :

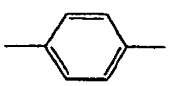
et/ou
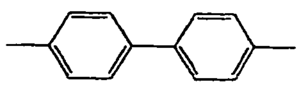
,

et
$Ar_2$ représente:

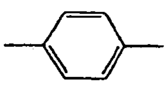
et/ou
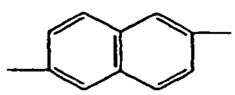
.

4. Résine de polyester liquide cristallin selon la revendication 1 ou la revendication 2, dans laquelle tous les deux, $Ar_1$ et $Ar_2$, représentent:

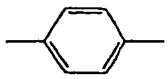

.

5. Composition de résine de polyester liquide cristallin comprenant 100 parties en poids de la résine de polyester liquide cristallin selon l'une quelconque des revendications 1 à 4 et 0,1 à 200 parties en poids d'une charge fibreuse, lamellaire ou particulaire et/ou renfort fibreux, lamellaire ou particulaire.

6. Un article moulé obtenu en moulant la résine de polyester liquide cristallin ou la composition de résine de polyester liquide cristallin selon l'une quelconque des revendications 1 à 5.

Figure 1

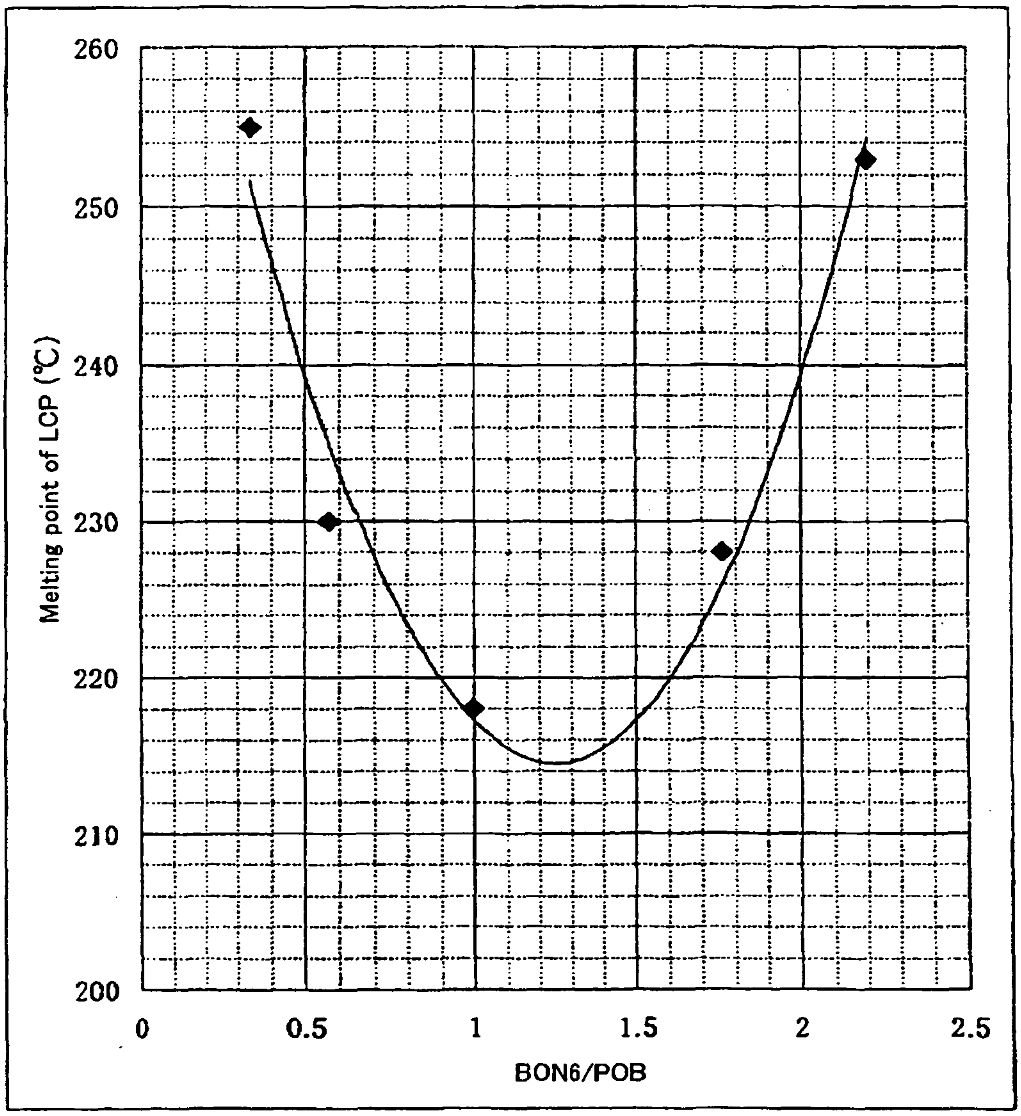
260
250
240
230
220
210
200
0
0.5
1
1.5
2
2.5
Melting point of LCP (℃)
BON6/POB

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP SHO55144024 B